(19) Europäisches Patentamt
European Patent Office
Office européen des brevets

(11) **EP 3 027 467 B1**

(12) **EUROPEAN PATENT SPECIFICATION**

(45) Date of publication and mention
of the grant of the patent:
**01.03.2017 Bulletin 2017/09**

(21) Application number: **14737019.1**

(22) Date of filing: **05.06.2014**

(51) Int Cl.:
**B60R 1/00** (2006.01)

(86) International application number:
**PCT/JP2014/065819**

(87) International publication number:
**WO 2015/015928 (05.02.2015 Gazette 2015/05)**

(54) **DRIVING ASSIST DEVICE**

FAHRASSISTENZVORRICHTUNG

DISPOSITIF D'ASSISTANCE À LA CONDUITE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.07.2013 JP 2013158304**

(43) Date of publication of application:
**08.06.2016 Bulletin 2016/23**

(73) Proprietor: **Toyota Jidosha Kabushiki Kaisha
Toyota-shi, Aichi 471-8571 (JP)**

(72) Inventors:
• **ISHIGURO, Yoko
Toyota-shi
Aichi 471-8571 (JP)**
• **MURAMATSU, Yoshiyuki
Toyota-shi
Aichi 471-8571 (JP)**

• **KITAGAWA, Nozomi
Kariya-city
Aichi 448-8661 (JP)**
• **IGUCHI, Sei
Kariya-city
Aichi 448-8661 (JP)**

(74) Representative: **Intès, Didier Gérard André et al
Cabinet Beau de Loménie
158 rue de l'Université
75340 Paris Cedex 07 (FR)**

(56) References cited:
**EP-A2- 2 003 019       EP-A2- 2 045 132
JP-A- 2005 184 225    JP-A- 2008 236 711
US-A1- 2008 204 557**

**Description**

Technical Field

The present invention relates to a driving assist device.

Background Art

Technology is known that uses a display device provided at a front pillar to display an image of a region that is a blind spot for a driver caused by the front pillar (see, for example, Japanese Patent Application Laid-Open (JP-A) Nos. 2011-234095, 2012-051563 and 2008-307982). Document EP2045132 discloses a driving assist device according to the preamble of claim 1.

SUMMARY OF INVENTION

Technical Problem

In technology such as the above, there is a concern regarding discomfort imparted to a driver due to a large perspective difference between the actual vehicle external scene and the image displayed on the display device.

An object of the present invention is to obtain a driving assist device capable of suppressing discomfort when a driver views an image of a blind spot.

Solution to Problem

A driving assist device according to a first exemplary embodiment of the present invention comprises: an imaging device that captures at least a portion of a vehicle-outside region configuring a blind spot for a driver; wherein a projection device that projects such that the driver views an image captured by the imaging device as a virtual image positioned at the vehicle outside of a vehicle component causing the blind spot.

In this driving assist device, at least a portion of the vehicle-outside region configuring a blind spot for a driver is captured by the imaging device. Due to the projection device, the image captured by the imaging device is viewed by the driver as a virtual image positioned (or seeming to be) at the vehicle outside (far side) of the vehicle component configuring the blind spot. As a result, there is a smaller perspective difference (difference in viewing distance) between the actual vehicle external scene and the virtual image compared to a case in which an image (screen) of a display device disposed inside the vehicle is viewed, making a driver less liable to experience discomfort from the virtual image.

In this way, the driving assist device according to the first aspect is accordingly capable of suppressing discomfort when a driver views an image of a blind spot region compared to a configuration in which an image is displayed on a display device provided to the vehicle component causing the blind spot.

In the above aspect, a configuration may be provided, wherein the projection device comprises a display device that displays the image; and a reflective member positioned on a driver side of the vehicle component to reflect the image being displayed by the display device toward the driver.

In such a driving assist device, the driver views the image captured by the imaging device as the virtual image by the reflective member reflecting the image displayed on the display device toward the driver side. This thereby enables the distance from the driver to the virtual image to be made the same as, or greater than, the sum of the distance from the display device to the reflective member, and the distance from the reflective member to the driver. As a result, a projection device that is able to exhibit the above function is configured using a simple structure.

In the above aspect, a configuration may be provided, wherein the projection device further comprises an image enlargement device that is provided between the display device and the reflective member, and that enlarges the image being displayed by the display device.

In such a driving assist device, the display image of the display device is enlarged by the image enlargement device, and the image enlarged by the image enlargement device is reflected by the reflective member toward the driver. Thus a distance from the driver to the virtual image can be secured even in a configuration with a short distance from the display device to the reflective member.

In the above aspect, a configuration may be provided, wherein the display device and the image enlargement device are disposed inside a vehicle interior member.

Such a driving assist device enables the projection device to be installed to a vehicle neatly since, out of the elements configuring the projection device, the display device and the image enlargement device are disposed inside the interior member.

In the above aspect, a configuration may be provided, wherein the projection device is configured such that a distance from the driver to the virtual image is 1.5m or greater.

Due to the distance (viewing distance) from the driver to the virtual image being 1.5m or greater, this driving assist device enables discomfort to a driver when viewing the image of the blind spot to be suppressed compared to cases in which the viewing distance is less than 1.5m.

Advantageous Effects of Invention

As explained above, the driving assist device according to the present invention exhibits the excellent advantageous effect of enabling discomfort to a driver when viewing an image of a blind spot to be suppressed.

## BRIEF DESCRIPTION OF DRAWINGS

Fig. 1 is a plan view schematically illustrating an overall configuration of a driving assist device according to a first exemplary embodiment.

Fig. 2 is a side view schematically illustrating an overall configuration of a driving assist device according to the first exemplary embodiment.

Fig. 3 is a schematic plan view to explain the layout of a display and mirror structure configuring a driving assist device according to the first exemplary embodiment.

Fig. 4 is a side view schematically illustrating an overall configuration of a driving assist device according to a second exemplary embodiment.

## DESCRIPTION OF EMBODIMENTS

Explanation follows regarding a visual information aid device 10 that is an example of a driving assist device according to the first exemplary embodiment of the present invention, with reference to the drawings. Note that in each of the drawings, the arrow FR, the arrow UP, the arrow RH, and the arrow LH respectively indicate the front direction, up direction, right direction and left direction when facing forward, for a vehicle installed with the visual information aid device 10. In the following, unless otherwise stated, reference simply to front-rear, up-down, and left-right refers to the front-rear of the vehicle front-rear direction, the up-down of the vehicle up-down direction, and the left and right when facing forward.

Vehicle General Configuration

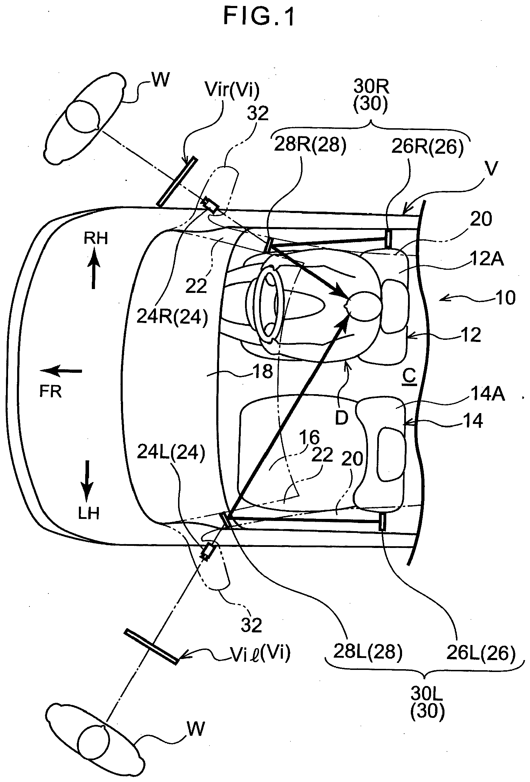

As illustrated in Fig. 1, a driver seat 12 and a front passenger seat 14 are provided within a cabin C of a vehicle V to which the visual information aid device 10 is applied. In this exemplary embodiment, the driver seat 12 is placed on the right side of the vehicle width direction center of the vehicle V. A windshield glass 16 and an instrument panel 18 are disposed in front of the driver seat 12. Side window glass 20 is disposed at the respective vehicle width direction outsides of the driver seat 12 and the front passenger seat 14.

A front pillar 22 (and a door frame, not illustrated in the drawings) is disposed respectively between the left and right side window glass 20 and the windshield glass 16. The left and right front pillars 22 correspond to a vehicle component that generates (causes) a blind spot for an occupant seated on the driver seat 12, namely the driver D.

Visual Information Aid Device

The visual information aid device 10 is configured to display to the driver D visual information of a vehicle-outside region that configures a blind spot for the driver D.

Specific explanation follows.

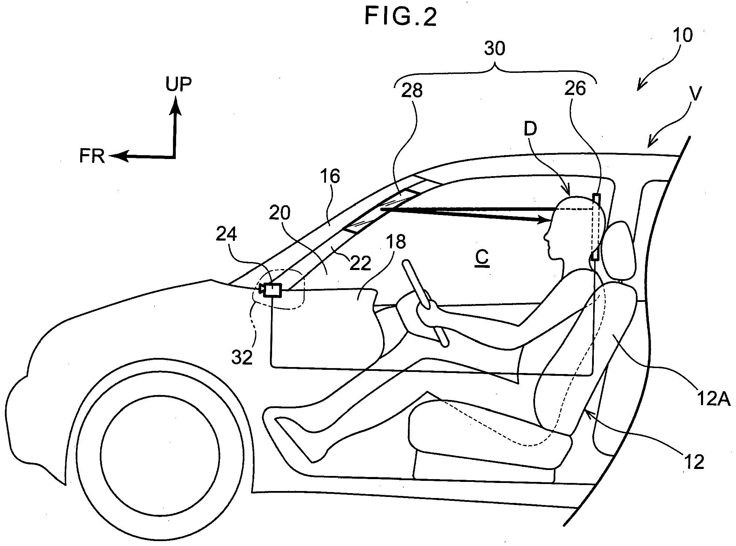

As illustrated in Fig. 1 and Fig. 2, the visual information aid device 10 is configured including a CCD camera 24 serving as an imaging device, a display 26 serving as a display device, and a mirror structure 28 serving as a reflective member. Pairs of the CCD camera 24, the display 26 and the mirror structure 28 are respectively provided on the left and right sides. In the following explanation, the suffix "R" is added to the reference numeral for the right side, and the suffix "L" is added to the reference numeral for the left side when discriminating between the left and right CCD cameras 24, displays 26, and mirror structures 28.

The right side CCD camera 24R is provided with its imaging direction aligned in plan view with a sight line direction Dgr from the driver D toward the right side front pillar 22 side, so as to capture images of a region diagonally forward and to the right of the cabin C. The left side CCD camera 24L is provided with its imaging direction aligned in plan view with a sight line direction Dgl from the driver D toward the left side front pillar 22 side, so as to capture images of a region diagonally forward and to the left of the cabin C. The left and right CCD cameras 24 are, for example, disposed inside corresponding door mirror devices 32 on the respective left and right sides.

The right side display 26R is configured for either wireless or wired input of image data from the CCD camera 24R, so as to display an image based on the image data. The display 26R is, for example, provided in the cabin C at the width direction outside of the driver seat 12 (at the side of a seatback 12A configuring the driver seat 12 in the present exemplary embodiment), with the display screen facing forward.

The left side display 26L is configured for either wireless or wired input of image data from the CCD camera 24L, so as to display an image based on the image data. The display 26L is, for example, provided in the cabin C at the vehicle width direction outside of the front passenger seat 14 (at the side of a seatback 14A configuring the driver seat 14 in the present exemplary embodiment), with the display screen facing forward.

The right side mirror structure 28R is provided along the right side front pillar 22 (pillar garnish, not illustrated in the drawings), so as to reflect the image displayed on the display 26R toward the driver D. As a result of this, a configuration is provided in which the driver D is able to view the image captured by the CCD camera 24R as a virtual image. In this exemplary embodiment, the display 26R and the mirror structure 28R configure a projector device 30 (the right side projector device 30R) serving as a projection device. The projector device 30R is configured to project such that the driver D views an image captured by the CCD camera 24R as a virtual image positioned further to the vehicle outside than the front pillar 22.

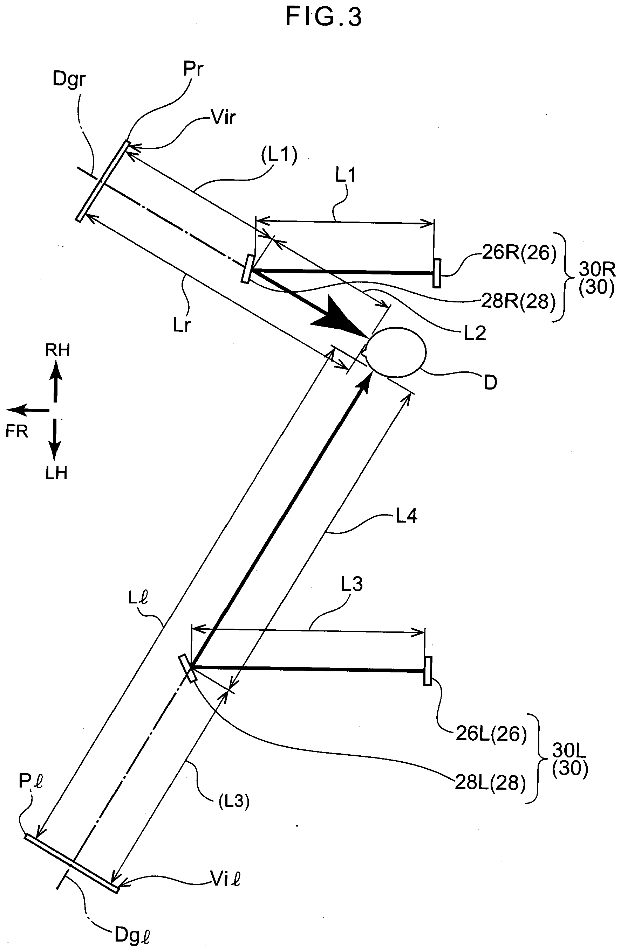

More specifically, the projector device 30 is configured as illustrated in Fig. 3, such that the distance of the sum of a distance L1 from the display 26R to the mirror structure 28R, and a distance L2 from the mirror structure 28R to the driver D, matches a viewing distance Lr from the driver D to the virtual image Vir. The display 26R and the mirror structure 28R are disposed such that the viewing distance Lr along the sight line direction Dgr is a sufficiently long distance with respect to the distance from the driver D to the right side front pillar 22. This thereby enables the driver D to view the virtual image Vir as an image positioned at a position Pr at the vehicle outside.

Similarly, the display 26L and the mirror structure 28L on the left side configure a left side projector device 30L (projector device 30). Namely, the left side mirror structure 28L is provided along the left side front pillar 22 (pillar garnish, not illustrated in the drawings) so as to reflect the image displayed on the display 26L toward the driver D. As a result of this, a configuration is provided in which the driver D is able to view the image captured by the CCD camera 24L as a virtual image.

More specifically, the projector device 30L is configured such that the distance of the sum of a distance L3 from the display 26L to the mirror structure 28L, and a distance L4 from the mirror structure 28L to the driver D, matches a viewing distance L1 from the driver D to the virtual image Vil. The display 26L and the mirror structure 28L are disposed such that the viewing distance L1 along the sight line direction Dgl is a sufficiently long distance with respect to the distance from the driver D to the left side front pillar 22. This thereby enables the driver D to view the virtual image Vil as an image positioned at a position P1 at the vehicle outside.

In this exemplary embodiment the viewing distances L1, Lr configured by the left and right projector devices 30L, 30R from the driver to the virtual images Vil, Vir are both 1.5m or greater.

Operation

Explanation next follows regarding operation of the first exemplary embodiment. Note that in the following explanation, the left and right virtual images Vir, Vil, and the viewing distances Lr, L1, are referred to respectively as the virtual images Vi and the viewing distances L when there is no discrimination made in the explanation.

First, the driver D of the vehicle V installed with the visual information aid device 10 drives the vehicle V whilst checking safety based on visual information viewed through the windshield glass 16 and the left and right side window glass 20.

In the visual information aid device 10, images captured by the left and right CCD cameras 24 are projected by the projector devices 30 to be viewed by the driver D as the virtual images Vi positioned diagonally in front of the front pillars 22 at positions at the vehicle outside. Namely, actual vehicle external scene s (visual information) of regions where blind spots are formed by the front pillars 22 are projected onto the mirror structures 28 provided to the front pillars 22 as virtual images Vi, thereby enabling the driver D to face in the direction to be checked (the blind spot direction) to view images that supplement the blind spot regions. This thereby enables the driver to notice a pedestrian W in cases in which the pedestrian W is present in a vehicle-outside region where a blind spot is present, such as for example illustrated in Fig. 1.

For example, in a Comparative Example in which a driver D views an image displayed on a screen of a display device disposed along the front pillar 22, the viewing distance from the driver D to the display image is about the same as the distance L2 from the driver D to the mirror structure 28 in the present exemplary embodiment. In the Comparative Example, there is therefore a large perspective difference between the viewing distance to the actual vehicle external scene (for example 2m) and the viewing distance to the displayed image. This results in the driver D needing to match (adjust) their focal point to the display image when switching from viewing the actual vehicle external scene to viewing the display image, with a tendency for this to impart discomfort to the driver D.

In contrast thereto, in the visual information aid device 10 according to the present exemplary embodiment, images captured by the CCD cameras 24 are viewed by the driver D as virtual images Vi at positions outside the vehicle. There is accordingly a smaller difference in viewing distance between the viewing distance (for example 2m) to the actual vehicle external scene and the virtual images Vi viewed by the driver D than in the Comparative Example described above, making the driver D less liable to experience discomfort in focal point adjustment to the virtual images Vi.

In this way, the visual information aid device 10 according to the first exemplary embodiment accordingly suppresses discomfort when the driver D views an image of the blind spot region caused by the front pillar 22 compared to a configuration in which a display device is provided to the front pillar 22 that forms the blind spot.

In particular, due to setting the viewing distances Lr, L1 from the driver D to the virtual images Vi at 1.5m or greater, the time required by the driver D for focal point adjustment to the virtual images Vi is shortened. It has, for example, been confirmed that when shifting sight line from the actual vehicle external scene to the virtual images Vi, focal point adjustment to the virtual images Vi can be performed in hardly any time even for a driver of 45 years of age or above. In other words, it is possible for the driver D to match to the focal points of both the actual vehicle external scene and the virtual images Vi (at the same time).

The visual information aid device 10 thereby effectively suppresses discomfort when the driver D views the respective blind spot regions caused by the front pillars 22 as the virtual images Vi, compared to a configuration in which the viewing distances Lr, L1 from the driver D to the virtual images Vi are less than 1.5m.

Moreover, in the visual information aid device 10, the images displayed on each of the displays 26 are reflected by the mirror structure 28 for the driver D to view as the virtual images Vi. As a result, the projector device 30 that is able to exhibit the above function is configured using a simple structure.

Second Exemplary Embodiment

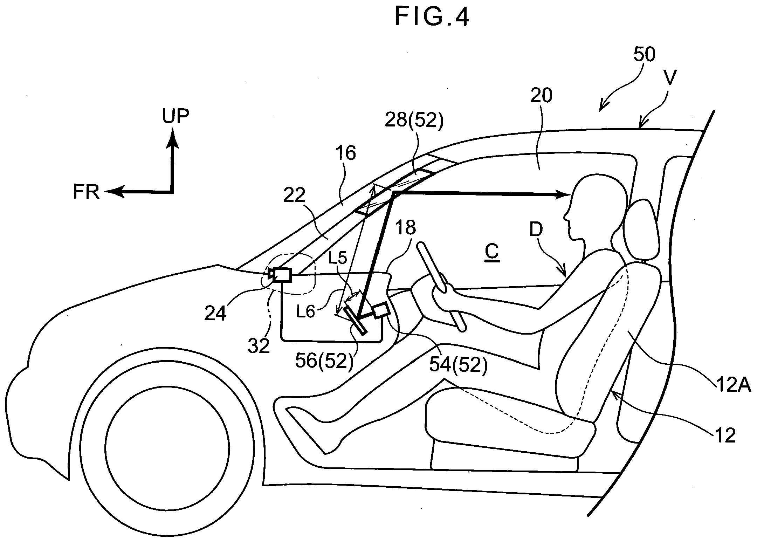

Explanation next follows regarding a visual information aid device 50 serving as another example of a driving assist device according to a second exemplary embodiment of the present invention, with reference to Fig. 4. Note that configuration that is basically the same as that of the first exemplary embodiment configuration is allocated the same reference numerals as the configuration of the first exemplary embodiment, and further explanation and illustration thereof is omitted. Left and right CCD cameras 24 and projection devices 52 configuring the visual information aid device 50 are configured with basically left-right symmetry, except for the optical axis direction, and so the singular form is used in the following explanation without particular discrimination between left and right.

The visual information aid device 50 is configured with main parts of the CCD camera 24 and the projection device 52. The projection device 52 is configured with main parts of a display 54, an image magnifying lens 56 serving as an image enlargement device, and a mirror structure 28.

The display 54 is configured with a smaller display screen that that of the display 26 in the first exemplary embodiment, and has a configuration with a smaller physical size than that of the display 26. The image magnifying lens 56 is an optical member with a function to optically magnify the image being displayed on the display 54, and a function to reflect the image toward the mirror structure 28.

The display 54 and the image magnifying lens 56 are disposed inside an instrument panel 18 that serves as a vehicle interior member. The sum of a distance L5 from the display 54 to the image magnifying lens 56, and a distance L6 from the image magnifying lens 56 to the mirror structure 28 is shorter than the distance L1 from the display 26 to the mirror structure 28 in the first exemplary embodiment.

A viewing distance L from the driver D to the virtual image Vi in the present exemplary embodiment is given by (a distance equivalent to) the sum of a corrected distance obtained by multiplying the distance L5 by a magnification power A of the image magnifying lens 56 (= L5 x A), and the above distance L6 and the distance L2.

$$L = L5 \times A + L6 + L2$$

The disposition of the display 54, the image magnifying lens 56, and the mirror structure 28 configuring the projection device 52, and the magnification power A of the image magnifying lens 56, are set such that the viewing distance L (each of the left and right viewing distances Lr, L1) is 1.5m or greater. Other configuration of the visual information aid device 50, including non-illustrated portions, is configured similarly to corresponding configuration in the visual information aid device 10 according to the first exemplary embodiment.

Therefore, the visual information aid device 50 according to the second exemplary embodiment is also capable of obtaining basically the same advantageous effects by operation similar to that of the visual information aid device 10 according to the first exemplary embodiment. In the visual information aid device 50, the image magnifying lens 56 also magnifies the display image of the display 54, and reflects the magnified image toward the driver D side using the mirror structure 28. This thereby enables the viewing distance from the driver D to the virtual image Vi to be secured even in configuration in which there is a short distance from the display 54 to the mirror structure 28.

Use of a display 54 with a small display screen, namely a small physical size, is thereby enabled. Moreover, due to the image magnifying lens 56 having an image reflecting function, there are fewer restrictions on the placement of the display 54 than in a configuration with direct reflection of the display 54 image by the mirror structure 28. Thus in the present exemplary embodiment, the display 54 and the image magnifying lens 56 configuring the projection device 52 are disposed inside the instrument panel 18. Thus with the exception of the mirror structure 28, the visual information aid device 50 including the projection device 52 can be mounted more neatly to the vehicle V than the visual information aid device 10, in which the display 26 is exposed inside the cabin C.

Note that although, in each of the above exemplary embodiments, examples are given in which visual information of blind spot regions caused by front pillars 22 is used to provide assistance as the virtual images Vi, the present invention is not limited thereto. In the present invention, the visual information that the driver views as virtual images may be any visual information, as long as it is visual information of a blind spot region of the driver D caused by a vehicle component. Thus, for example, the visual information aid device may be configured to capture an image of a vehicle external (or cabin C external) region where there is a blind spot caused by a fender or front hood, and to project the captured image onto a mirror structure provided to the instrument panel. Moreover, for example, the visual information aid device may be configured to capture visual information where there is a blind spot to the rear (when reversing), such as that caused by a rear seat back or rear pillar, a rear fender, or a rear door, and to project the captured visual information onto the rear pillar or a mirror structure provided at the rear pillar or the like.

Moreover, although in each of the above exemplary embodiments examples have been given in which the CCD cameras 24 are employed as imaging device, the present invention is not limited thereto, and any imaging device may be employed. A CMOS camera or the like may accordingly be employed, for example, in place of the CCD camera 24.

Moreover, in each of the above exemplary embodiments examples are given in which the CCD cameras 24 and the projector devices 30, 52 are provided at both the left and right, however the present invention is not limited thereto. For example, configuration may be made with the CCD camera 24 and the projector device 30, 52 provided only on one side out of the left or right.

Moreover, in the second exemplary embodiment, an example is given in which the display 54 and the image magnifying lens 56 configuring the projection device 52 are disposed in the instrument panel 18, however the present invention is not limited thereto. For example, configuration may be made with the display 54 and the image magnifying lens 56 disposed inside a roof trim or door trim.

Moreover, in the present invention, obviously various modifications may be implemented within a range not departing from the spirit of the present invention. For example, configurations may be employed that are appropriate combinations of configuration features of each of the exemplary embodiments and modified embodiments.

| | |
|---|---|
| 10 | visual information aid device (driving assist device) |
| 22 | front pillar (vehicle component) |
| 24 | CCD camera (imaging device) |
| 26 | display (display device, projection device) |
| 28 | mirror structure (reflective member, projection device) |
| 30 | projector device (projection device) |
| 50 | visual information aid device (driving assist device) |
| 52 | projection device (projection device) |
| 54 | display (display device, projection device) |
| 56 | image magnifying lens (image enlargement device, projection device) |

**Claims**

1.  A driving assist device comprising:

    an imaging device (24) that captures at least a portion of a vehicle-outside region configuring a blind spot for a driver; **characterized in that** it comprises
    a projection device (26, 28, 56) that projects such that the driver views an image captured by the imaging device as a virtual image positioned at the vehicle outside of a vehicle component causing the blind spot.

2.  The driving assist device of claim 1, wherein the projection device comprises:

    a display device (26) that displays the image; and
    a reflective member (28) positioned on a driver side of the vehicle component to reflect the image being displayed by the display device toward the driver.

3.  The driving assist device of claim 2, wherein the projection device further comprises an image enlargement device (56) that is provided between the display device (26) and the reflective member (28), and that enlarges the image being displayed by the display device.

4.  The driving assist device of claim 3, wherein the display device (26) and the image enlargement device (56) are disposed inside a vehicle interior member.

5.  The driving assist device of any one of claim 1 to claim 4, wherein the projection device (26, 28, 56) is configured such that a distance from the driver to the virtual image is 1.5m or greater.

**Patentansprüche**

1.  Fahrassistenzvorrichtung, umfassend:

    eine Bilddarstellungsvorrichtung (24), die mindestens einen Abschnitt eines Fahrzeugaußenbereichs erfasst, der für einen Lenker einen toten Winkel bildet, **dadurch gekennzeichnet, dass** sie umfasst:

    eine Projektionsvorrichtung (26, 28, 56), die derart projiziert, dass der Fahrzeuglenker ein durch die Bilddarstellungsvorrichtung erfasstes Bild als virtuelles Bild betrachtet, das an der Fahrzeugaußenseite einer Fahrzeugkomponente, die den toten Winkel verursacht, positioniert ist.

2.  Fahrassistenzvorrichtung nach Anspruch 1, wobei die Projektionsvorrichtung umfasst:

    eine Anzeigevorrichtung (26), die das Bild anzeigt, und
    ein reflektierendes Glied (28), das auf einer Fahrzeuglenkerseite der Fahrzeugkomponente positioniert ist, um das durch die Anzeigevorrichtung angezeigte Bild zum Fahrzeuglenker hin zu reflektieren.

3.  Fahrassistenzvorrichtung nach Anspruch 2, wobei die Projektionsvorrichtung ferner eine Bildvergrößerungsvorrichtung (56) umfasst, die zwischen der Anzeigevorrichtung (26) und dem reflektierenden Glied (28) vorgesehen ist und die das Bild, das durch die Anzeigevorrichtung angezeigt wird, vergrößert.

4. Fahrassistenzvorrichtung nach Anspruch 3, wobei die Anzeigevorrichtung (26) und die Anzeigevergrößerungsvorrichtung (56) innerhalb eines Fahrzeuginnenraumglieds angeordnet sind.

5. Fahrassistenzvorrichtung nach einem der Ansprüche 1 bis 4, wobei die Projektionsvorrichtung (26, 28, 56) derart ausgebildet ist, dass ein Abstand von dem Fahrzeuglenker zu dem virtuellen Bild 1,5 m oder mehr beträgt.

de 1,5 m ou plus.

**Revendications**

1. Dispositif d'aide à la conduite comportant :

un dispositif d'imagerie (24) qui capture au moins une partie d'une zone à l'extérieur du véhicule configurant un angle mort pour un conducteur ; **caractérisé en ce qu'**il comporte un dispositif de projection (26, 28, 56) qui projette de telle sorte que le conducteur voit une image capturée par le dispositif d'imagerie sous la forme d'une image virtuelle positionnée au niveau de l'extérieur de véhicule d'un composant de véhicule provoquant l'angle mort.

2. Dispositif d'aide à la conduite selon la revendication 1, dans lequel le dispositif de projection comporte :

un dispositif d'affichage (26) qui affiche l'image ; et
un élément réfléchissant (28) positionné sur un côté de conducteur du composant de véhicule pour réfléchir l'image qui est affichée par le dispositif d'affichage vers le conducteur.

3. Dispositif d'aide à la conduite selon la revendication 2, dans lequel le dispositif de projection comporte en outre un dispositif d'agrandissement d'image (56) qui est prévu entre le dispositif d'affichage (26) et l'élément réfléchissant (28), et qui agrandit l'image qui est affichée par le dispositif d'affichage.

4. Dispositif d'aide à la conduite selon la revendication 3, dans lequel le dispositif d'affichage (26) et le dispositif d'agrandissement d'image (56) sont disposés à l'intérieur d'un élément intérieur de véhicule.

5. Dispositif d'aide à la conduite selon l'une quelconque des revendications 1 à 4, dans lequel le dispositif de projection (26, 28, 56) est configuré de telle sorte qu'une distance du conducteur à l'image virtuelle est

# FIG.1

FIG.2

EP 3 027 467 B1

# FIG.3

FIG.4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011234095 A
- JP 2012051563 A
- JP 2008307982 A
- EP 2045132 A